Europäisches Patentamt

European Patent Office

Office européen des brevets

(11) Veröffentlichungsnummer : **0 185 143**
B1

(12) **EUROPÄISCHE PATENTSCHRIFT**

(45) Veröffentlichungstag der Patentschrift :
02.11.89

(21) Anmeldenummer : 85111000.7

(22) Anmeldetag : 31.08.85

(51) Int. Cl.⁴ : **H 04 B 1/20**, H 01 H 13/70,
H 01 H 9/02

(54) Vorrichtung zum Fernbedienen von mehreren Audio- und Video-Geräten.

(30) Priorität : 15.12.84 DE 3445891

(43) Veröffentlichungstag der Anmeldung :
25.06.86 Patentblatt 86/26

(45) Bekanntmachung des Hinweises auf die Patenterteilung : 02.11.89 Patentblatt 89/44

(84) Benannte Vertragsstaaten :
AT DE FR GB IT

(56) Entgegenhaltungen :
EP--A-- 0 059 999
DE--A-- 2 714 874
FR--A-- 1 504 706
GB--A-- 2 092 347
GB--A-- 2 146 813

(73) Patentinhaber : GRUNDIG E.M.V. Elektro-Mechanische Versuchsanstalt Max Grundig holländ. Stiftung &
Co. KG.
Kurgartenstrasse 37
D-8510 Fürth/Bay. (DE)

(72) Erfinder : Kotter, Karl-Heinz, Dipl.-Ing., Dipl.-Wirt-
sch.Ing.
Ackerstrasse 10
D-8502 Zirndorf-Weiherdorf (DE)
Erfinder : Loos, Karl Johann
Albrecht Dürer Strasse 48
D-8507 Oberasbach (DE)

## Beschreibung

Die Erfindung bezieht sich auf eine Vorrichtung zum Fernbedienen von mehr als zwei Geräten, vorzugsweise von Geräten der Unterhaltungselektronik, z. B. Farbfernsehgeräte, Videogeräte, HiFi-Stereo-Anlagen, Bildplattenspieler sowie zur Signaleingabe für Bildschirmtext und Videotext, usw., wobei für jeden Geräte-Funktionsbereich ein eigener Bedienungsteil vorgesehen ist.

Fernbedienungsvorrichtungen sind für Geräte der Unterhaltungselektronik bekannt. Sie bestehen im wesentlichen aus einem Gehäuse, in das die Bedientasten, der Signalgeber und die Batterien für die Stromversorgung eingesetzt sind. Die Fernbedienungsvorrichtungen sind mit einem Ultraschall- oder Infrarot-Sender ausgerüstet. Ein Fernbedienungsgeber dieser Art weist daher z. B. einen Infrarotsender auf, der die entsprechenden Signale zum Empfangsgerät hin ausstrahlt. Das Empfangsgerät weist wiederum einen Empfänger auf, der die Signale in umgesetzter Form für die Gerätefunktionssteuerung weiterleitet. Er ist auch bekannt, daß zur Tonübertragung den Geräten Infrarot-Sender zugeordnet sind, und die hiermit gesendeten Signale werden über einen in einem Kopfhörer befindlichen Empfänger einem Hörer zugänglich gemacht. Nachteilig ist hierbei, daß der Kopfhörer durch Einbau des Empfängers ein unerwünscht hohes Gewicht aufweist und daher nicht über längere Zeit getragen werden kann.

Es ist auch bekannt, z. B. aus DE-A-2 714 874, daß Fernbedienungsvorrichtungen bereits zur Bedienung von zwei voneinander getrennt funktionsfähigen Geräten ausgeführt sind. Die hierfür erforderliche Vielzahl von Bedienungsknöpfen und deren Anordnung auf einem Bedienungsteil verwirrt den Benutzer und führt zu Fehlbedienungen. Es ist daher bereits ein Vorschlag bekannt, der vorsieht, daß auf der Oberseite und auf der Unterseite des Gehäuses einer Fernbedienungsvorrichtung Bedienungselemente angeordnet sind, und je nach Bedienung eines von zwei Geräten die Bedienungsvorrichtung gewendet wird. Nachteilig ist hierbei, daß durch eine derartige Maßnahme nur zwei Geräte von zwei unterschiedlichen Bedienfeldern aus bedient werden können.

Aufgabe der Erfindung ist es daher, eine Vorrichtung zum Fernbedienen von mehr als zwei Geräten zu schaffen, bei der für jedes Gerät eine unterscheidbare Fläche mit Bedienungselementen vorgesehen ist und die den Anschluß eines Kopfhörers ermöglicht.

Diese Aufgabe wird erfindungsgemäß durch die im kennzeichnenden Teil des Anspruchs 1 angegebenen Merkmale gelöst.

Vorteilhafte Ausgestaltungen der erfindungsgemäßen Vorrichtung ergeben sich aus den Unteransprüchen.

Die Erfindung wird nachfolgend unter Bezugnahme auf zwei Zeichnungsfiguren näher erläutert.

Fig. 1 zeigt eine perspektivische Darstellung einer Fernbedienungsvorrichtung in Dreikantform und

Fig. 2 eine perspektivische Darstellung einer Fernbedienungsvorrichtung in Würfelform.

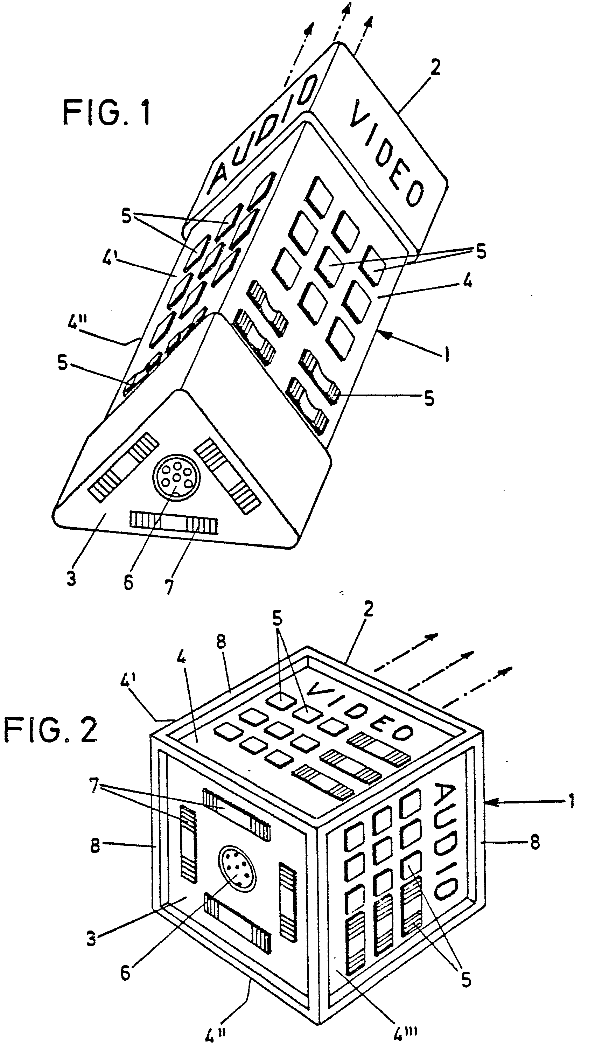

Man erkennt aus der Figur 1, daß das Gehäuse 1 eine längsgezogene Dreikantstabform aufweist und an der einen Stirnseite ein Geberteil 2 und an der anderen Stirnseite ein Anschlußteil 3 angeordnet ist. Zwischen beiden Seitenteilen sind die drei Bedienungsteile 4, 4', 4'' zurückgesetzt angeordnet. Die Bedienungsteile weisen verschiedenartig ausgebildete Tasten 5 auf. Das Geberteil 2 ist auch als Empfangsteil ausgebildet, und das Anschlußteil ist mit einer Anschlußleitung oder Anschlußbuchse 6 für einen Kopfhörer versehen. Ferner weist das Anschlußteil Steuertasten 7 auf, die allen Bedienungsteilen gemeinsam zugeordnet sind. Das Geberteil und/oder das Anschlußteil ist mit einer Beschriftung versehen, die die Zuordnung des Bedienungsteils 4 bis 4'' zum jeweiligen Gerät (Videorecorder, HiFi-Anlage, usw.) anzeigt. Im Inneren des Gehäuses befinden sich entsprechende Schaltplatinen für die Tasten und für das Geber- und Anschlußteil sowie die Bordbatterie.

In der Figur 2 ist das Gehäuse der Fernbedienungsvorrichtung als Würfel dargestellt. Der Würfel hat gegenüber den Bedienungsteilen 4 bis 4''' überstehende Kantenleisten 8. Von zwei gegenüberliegenden Seiten der sechs Seiten des Würfels weist die eine das Geberteil 2 und die andere das Anschlußteil 3 der Fernbedienungsvorrichtung auf. Sofern das Geberteil 2 mit einem Empfangsteil für Audiosignale ausgerüstet ist, befindet sich auf dem Anschlußteil ein Kopfhöreranschluß bzw. eine Kopfhörer-Anschlußbuchse 6 oder ein eingebauter Kleinlautsprecher. Dem Anschlußteil 3 sind ferner für jedes Bedienungsteil eine Steuertaste 6 als Laut-Leise-Taste oder Ein-Aus-Taste zugeordnet. Über diese Taste kann die Lautstärke des Gerätes und/oder die des angeschlossenen Kopfhörers oder des eingebauten Lautsprechers verändert werden. Die Tasten 5 auf den Bedienungsteilen können unterschiedliche Formgebungen aufweisen. Ebenso sind die unterschiedlichen Bedienteile 4 bis 4''' durch verschiedene Farbgebungen unterscheidbar. Weiterhin ist das jeweils für die Benutzung nach oben gedrehte Bedienungsteil 4 mit einer dem jeweiligen Gerät zugeordneten Beschriftung versehen.

## Patentansprüche

1. Vorrichtung zum Fernbedienen von mehreren Audio- und/oder Video-Geräten mit in einem Gehäuse angeordneten Signalgeberteil, mit einer Bordbatterie sowie mit einem Bedienungsteil, wobei der Bedienungsteil auf mehr als zwei voneinander unterscheidbaren Flächen auf einem Gehäuse angeordnet ist, und das Gehäuse ohne Richtungsänderung des Geberteils in die zur Benutzung des gewünschten Bedienungsteils zugängliche Lage drehbar ist, sowie die Gehäuseform einen dreieckigen, rechteckigen oder vieleckigen Querschnitt aufweist, insbesondere das Gehäuse als Würfel ausgebildet ist, dadurch gekennzeichnet, daß dem Geberteil (2) ein Empfangsteil für Audiosignale zugeordnet ist, und daß von zwei gegenüberliegenden Seiten eine Seite des Gehäuses (1) das Geber- und Empfangsteil und die andere Seite ein Anschlußteil (3) aufweist.

2. Vorrichtung nach Anspruch 1, dadurch gekennzeichnet, daß das Anschlußteil (3) vorzugsweise eine Kopfhörer-Anschlußbuchse und/oder einen Kleinlautsprecher (6) aufweist.

3. Vorrichtung nach den Ansprüchen 1 und 2, dadurch gekennzeichnet, daß dem Anschlußteil ein oder mehrere Steuertasten (7) zugeordnet sind.

## Claims

1. Device for the remote control of a plurality of audio and/or video units with a signal transmitting part arranged in a housing, with an on-board battery as well as with an operator control part, the operator control part being arranged on more than two mutually distinguishable surfaces on a housing, and the housing being adapted to turn into the accessible position for use of the desired operator control part without a directional change of the transmitting part, and the shape of the housing having a triangular, rectangular or polygonal cross-section, in particular the housing being designed as a cube, characterized in that the transmitting part (2) is assigned a receiving part for audio signals, and in that, of two opposite sides, one side of the housing (1) has the transmitting and receiving part and the other side has a connection part (3).

2. Device according to Claim 1, characterized in that the connection part (3) preferably has a headphones connecting jack and/or a mini loudspeaker (6).

3. Device according to Claims 1 and 2, characterized in that the connection part is assigned one or more control buttons (7).

## Revendications

1. Dispositif de télécommande de plusieurs appareils de son et/ou d'image avec une section d'émission de signaux, disposée dans un boîtier, une batterie incorporée ainsi qu'une section de commande, dans lequel la section de commande comporte plus de deux surfaces reconnaissables l'une de l'autre sur un boîtier et le boîtier, sans changement de direction de la section d'émission, peut être tourné dans une position accessible pour l'utilisation de la section de commande voulue, dans lequel le boîtier a une forme triangulaire, rectangulaire ou polygonale et particulièrement, le boîtier est réalisé comme un cube, caractérisé en ce qu'une section de réception pour des signaux de son est disposée sur la section d'émission (2) et en ce que, parmi deux faces opposées, une face du boîtier (1) comporte la section d'émission et de réception et l'autre face comporte une section de branchement (3).

2. Dispositif selon la revendication 1, caractérisé en ce que la section de branchement (3) comporte de préférence une prise de branchement de casque d'écoute et/ou un petit haut-parleur.

3. Dispositif selon les revendications 1 et 2, caractérisé en ce qu'une ou plusieurs touches de commande sont disposées sur la section de branchement.

EP 0 185 143 B1

FIG. 1

FIG. 2